# EUROPÄISCHE PATENTANMELDUNG

(11) **EP 3 499 069 A1**
(43) Veröffentlichungstag der Anmeldung: **19.06.2019**
(21) Anmeldenummer: 18000559.7
(22) Anmeldetag: 26.06.2018
(51) Int. Cl.: F16D 3/38, F16H 1/00

(54) **90°-GELENKGETRIEBE**

(30) Priorität: 15.12.2017 DE 102017011608
(71) Anmelder: Braun, Jürgen, 72149 Neustetten (DE)
(72) Erfinder: Braun, Jürgen, 72149 Neustetten (DE)

(57) **Zusammenfassung**

Gleichlaufgelenke oder homokinetische Gelenke werden für die kontinuierliche Übertragung von Drehbewegungen und Drehmomenten eingesetzt. Sie übertragen die Drehbewegung einer antreibenden Welle auf eine anzutreibende Welle ohne Veränderung der Drehzahl oder des Drehmomentes. Die Übertragung erfolgt unabhängig von Drehzahl, Drehmoment oder dem Wert des Beugungswinkels und unabhängig von der Geschwindigkeit mit der sich dieser Beugungswinkel ändert.

Gleichlaufgelenke mit einem Beugungswinkel von 90° sind mit speziell geformten Zahnradpaaren ausgestattet, welche über ein Innengelenk federnd gelagert zusammengehalten werden.

Bei diesem Gelenkgetriebe wird ein Beugungswinkel von 90° erreicht, indem die zu verbindenden Wellen mit fest gelagerten Kegel- und Stirnradpaaren so miteinander verbunden werden, dass kein federn gelagertes Innengelenk benötigt wird. Damit können hohe Drehzahlen und hohe Drehmomente übertragen werden.

## Beschreibung

Die Erfindung betrifft ein Gelenkgetriebe nach dem Oberbegriff des Anspruches 1. Gleichlaufgelenke oder homokinetische Gelenke werden für die kontinuierliche Übertragung von Drehbewegungen und Drehmomenten eingesetzt. Sie übertragen die Drehbewegung einer antreibenden Welle auf eine anzutreibende Welle ohne Veränderung der Drehzahl oder des Drehmomentes. Die Übertragung erfolgt unabhängig von Drehzahl, Drehmoment oder dem Wert des Beugungswinkels.

Gleichlaufgelenke müssen in sich spielarm sein, um beschleunigte oder verzögerte Drehbewegungen ohne Stöße übertragen zu können. Sie sollten wartungsarm arbeiten und je nach Bauart, kleine oder große Drehmomente, bei höheren oder niedrigeren Temperaturen, zerstörungsfrei und formschlüssig übertragen.

Es ist bekannt zur Erfüllung des Erfordernisses, eine Drehbewegung homokinetisch und formschlüssig bis zu einem Beugungswinkel von 90° zu übertragen, Gleichlaufgelenke mit Stirnumfangsverzahnung einzusetzen, die über ein Innengelenk axial federnd gelagert zusammengehalten werden; gemäß DE 196 11 273 C1, wobei das Innengelenk über eine Kugel- und Kugelpfannenhälfte realisiert wird. Diese Hälften werden über zwei axial federnd gelagerte Zugbolzen, die an der Gelenkmitte zugewandten Seiten jeweils die Kugel oder die Kugelpfanne aufweisen, in nur einer Ebene umlenkbar verbunden.

Dies hat zur Folge, dass nur bei einer fluchtenden Position zwischen Kugel und Kugelpfanne der Beugungswinkel von 90° erreicht werden kann und bei einer ungünstigen Position von Kugel- und Kugelpfanne ein Blockieren der Beugebewegung vorkommt. Dieses Gelenk steht je nach Beugungswinkel unter veränderlicher Federspannung, die mit Zunahme des Beugungswinkels größer wird, sodass das Gelenk bestrebt ist, die gestreckte Stellung einzunehmen. Weiterhin können sich bei einem höheren Drehmoment die beiden verzahnten Gelenkhälften infolge der axial federnd gelagerten Zugbolzen zueinander verlagern, wodurch starke Vibrationen oder ein Überspringen der Zähne entstehen können.

Ähnliches gilt für US 912 096, wo die Gelenkhälften über zwei axial federnd gelagerte Zugbolzen zusammengehalten werden, die an der Gelenkmitte zugewandten Seiten ein scharnierähnliches Lager aufweisen. Nachteilig bei diesem bekannten Gelenk ist, dass es wegen der nur eindimensionalen Abwinkelbarkeit nicht ohne weiteres aus der gestreckten in die gebeugte Stellung zu bringen ist. Ebenso steht dieses Gelenk je nach Beugungswinkel unter veränderlicher Federspannung, die mit Zunahme des Beugungswinkels größer wird, sodass das Gelenk bestrebt ist, die gestreckte Stellung einzunehmen.

Aus DE 40 30 737 C2 ist ein Gleichlaufgelenk mit Radienzahnrädern bekannt, bei dem die beiden Gelenkhälften über ein Ösengelenk ebenfalls federn gelagert zusammengehalten werden. Dieses Gelenk lässt sich aus der gestreckten Position uneingeschränkt in jede beliebige Richtung umlenken. Nachteilig ist hier, dass sich bei einem höheren Drehmoment die beiden verzahnten Gelenkhälften infolge der axial federnd gelagerten Zugbolzen zueinander verlagern können und das Gelenk ständig bestrebt ist, die gestreckte Stellung einzunehmen.

Aus der US 4 721 493 ist ein Gelenk bekannt, bei dem die Gelenkhälften durch einen vorgespannten flexiblen Draht zusammengehalten werden. Nachteilig hierbei ist, dass der Draht bei Drehung des gebeugten Gelenkes einer ständigen Biegebeanspruchung unterliegt und das Gelenk ebenfalls bestrebt ist, die gestreckte Stellung einzunehmen.

Aus DE-AS 1 019 131 ist ein Wellengelenk mit konvexen Zahnkränzen bekannt, die miteinander durch schwenk- und verdrehbare Verbindungsmittel im Eingriff stehen. Bei diesem Gelenk unterliegen die Verbindungsmittel keiner ständigen Zugspannung, wodurch das Gelenk kein Bestreben hat, sich aus der gebeugten in die gestreckte Position zurückzubewegen. Nachteilig bei diesem bekannten Gelenk ist, dass es wegen der einseitigen und eindimensionalen Abwinkelbarkeit nicht ohne weiteres aus der gestreckten in eine gebeugte Stellung zu bringen ist und bei einer ungünstigen Position oder Richtungslage des Verbindungsmittels sogar ein Blockieren der Beugebewegung besteht.

Aus der DE 44 10 377 A1 ist ein Gelenk bekannt, bei dem Radienzahnräder über ein kurvengesteuertes Innengelenk in gegenseitigem Eingriff gehalten werden. Dieses Innengelenk unterliegt ebenfalls keiner ständigen Zugspannung und weist daher kein Bestreben auf, sich aus der gebeugten in die gestreckte Position zurückzubewegen. Nachteilig ist, dass dieses Gelenk für kleine Beugungswinkel nicht verwendet werden kann, da es erst ab einem bestimmten Beugungswinkel einen Längenausgleich ermöglicht. Weiterhin sind die Führungselemente aufwendig herzustellen und benötigen kurze Wartungsintervalle.

Das in der US 2 261 901 dargestellte Gelenk wird über eine scharnierähnliche Halterung zusammengehalten, wodurch nur eine eindimensionale Abwinkelbarkeit zu erreichen ist. Ähnliches gilt für das aus der US 4 789 377 und der US 1 196 268 bekannte Gelenk, wo die Abwinkelbarkeit ebenfalls durch eine äußere Vorrichtung eingeschränkt wird.

Der Erfindung liegt die Aufgabe zugrunde, ein Gelenkgetriebe bereitzustellen, das eine kontinuierliche Übertragung von Drehbewegungen und Drehmomenten von einer antreibenden Welle auf eine axial fluchtende oder eine axial nicht fluchtende anzutreibende Welle bis 90°-Beugungswinkel gleichförmig, formschlüssig und vibrationsarm zu übertragen, ohne Veränderung der Drehzahl oder des Drehmomentes und ohne dem Bestreben sich in die gestreckte Position zurückzubewegen.

Diese Aufgabe wird erfindungsgemäß durch die im Kennzeichnungsteil des Patentanspruches 1 angegebenen Merkmale gelöst.

Die mit der Erfindung erzielten Vorteile bestehen insbesondere darin, eine gleichförmige Drehbewegung bis zu 90° pro Gelenkgetriebe übertragen zu können, bei dem der Beugungswinkel pro Gelenkgetriebe in jede Richtung beliebig variieren kann und dabei keinerlei Zugkräfte erforderlich sind, um das Gelenkgetriebe zusammenzuhalten. Ebenso kann bei zwei hintereinander angebrachten Gelenkgetrieben, eine gleichförmige Drehbewegung mit einem Beugungswinkel von max. 180° erreicht werden, ohne auf eine Parallelität zwischen einer Antriebsseite und einer Abtriebsseite zu achten.

Als Verbindungselement für die beiden Gelenkhälften und als Halterung für die verwendeten Stirn- und Kegelräder werden zwei über ein Achsenkreuz verbundene je um 90° verdreht angeordnete Gelenkgabeln verwendet, die über Lagerungen komplett von einer Drehmoment- und Drehzahlübertragung vom Antriebsstrang entkoppelt sind. Das Drehmoment und die Drehzahl werden somit über die Stirn- und Kegelräder übertragen und sind dabei so mit den Gelenkgabeln an deren Innen- und Außenseiten angeordnet, dass diese beliebig aus der gestreckten Stellung in jede gewünschte Beugungsrichtung bis max. 90° gebeugt werden können. Da die Drehmoment- und Drehzahlübertragung über die Verzahnung erfolgt, bleibt bei einer Beugung des Gelenkgetriebes das Verbindungselement ohne Mitzudrehen zwischen den Stirn- und Kegelrädern über die jeweilige Lagerung stehen. Dies ermöglicht einen ruhigen Lauf der verwendeten Stirn- und Kegelräder während der Übertragung des Drehmomentes bei niedrigen und hohen Drehzahlen.

Vorteilhafte Ausgestaltung der Erfindung ist in den folgenden Zeichnungen dargestellt und im Folgenden näher beschrieben. Es zeigt
- **Fig. 1**: die Vorderansicht eines 90°-Gelenkgetriebes in der gestreckten Stellung,
- **Fig. 2**: den Schnitt A-A des 90°-Gelenkgetriebes,
- **Fig. 3**: die isometrische Ansicht des 90°-Gelenkgetriebes,

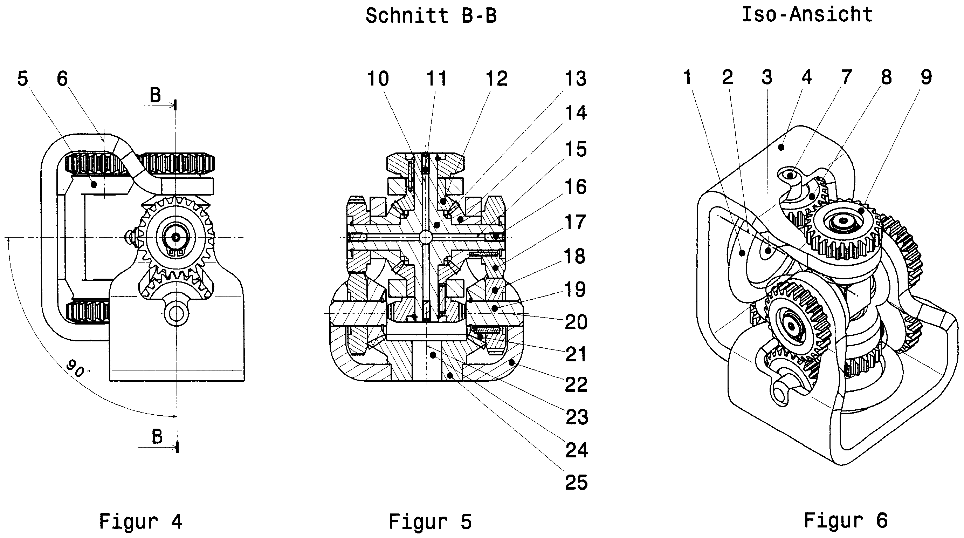

- **Fig. 4**: die Vorderansicht eines 90°-Gelenkgetriebes in der 90°-Stellung,
- **Fig. 5**: den Schnitt B-B des 90°-Gelenkgetriebes,
- **Fig. 6**: die isometrische Ansicht des 90°-Gelenkgetriebes in der 90°-Stellung.

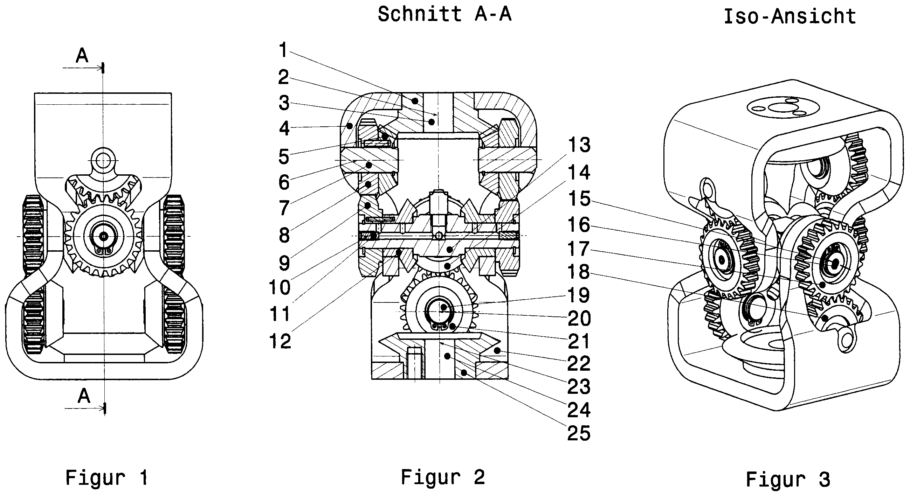

Das aus Fig. 1 ersichtliche 90°-Gelenkgetriebe mit Stirn- und Kegelrädern ist mit den beiden Gelenkgabeln (4, 22) und den Anschlusskegelrädern (1, 25) dargestellt. Die Anschlusskegelräder (1, 25) können je nach Anwendungsfall mit üblichen Anschlüssen wie bspw. Flansch oder Steckbolzen ausgeführt werden.

Das Achsenkreuz 13 kann mit Durchgangsbohrungen, Verschlussstopfen und einem Schmiernippel ausgeführt werden, um für ausreichend Schmierung an den Lagerstellen zu sorgen. Das 90°-Gelenkgetriebe kann auch von einem mit Fett gefüllten Faltenbalg umgeben sein. Damit erreicht man eine Dauerschmierung, einen Schutz vor Verschmutzung und einen Schutz gegen Hineingreifen in die Verzahnung. Weiterhin kann die Verzahnung mit einer Gerad-, Schräg- oder Spiralverzahnung ausgeführt werden.

Das Anschlusskegelrad 1 ist drehbar gelagert über die 1. Lagerachse 2 mit der Gelenkgabel 4 verbunden und treibt über die 2. Lagerachse 6 das Kegelrad 5 an. Das Kegelrad 5 ist formschlüssig mit dem Stirnrad 8 verbunden. Diese beiden Zahnräder sind fertigungsbedingt unterteilt und könnten auch aus einem Stück hergestellt werden.

Das Stirnrad 8 auf der 2. Lagerachse 6 treibt das Stirnrad 9 auf der 3. Lagerachse 10 an. Über das Stirnrad 9 wird die Kraftübertragung formschlüssig an das Kegelrad 12 übertragen. Hierbei sind beide Zahnräder (9, 12) freidrehend auf der 3. Lagerachse 10 gelagert. Die Gelenkgabel 4 weist pro Kraftstrang 3 Lagerachsen auf, um die jeweiligen Kegel- und Stirnräder freidrehend gelagert aufnehmen zu können. Die Gelenkgabel 4 hat somit für beide Kraftstränge insgesamt 5 Lagerachsen. Die beiden Kegelräder 12 und 14 sind im gegenseitigen Eingriff und befinden sich freidrehend auf dem Achsenkreuz 13. Hierbei erfolgt die Kraftübertragung entsprechend dem Beugungswinkel bis max. 90° über das Achsenkreuz 13 von der ersten an die zweite Gelenkhälfte.

Die Gelenkgabeln (4, 22) weisen eine abgestufte Gabel auf, um den Einbau des Achsenkreuzes 13 in die jeweilige Gelenkgabel (4, 22) von der Gabelinnenseite zu ermöglichen.

Das Kegelrad 14 treibt über die 3. Lagerachse 15 das Stirnrad 17 an. Dabei sind das Stirnrad 17 und das Kegelrad 14 formschlüssig miteinander verbunden, wobei beide Zahnräder freidrehend auf der 3. Lagerachse 15 gelagert sind. Das Stirnrad 17 auf der 3. Lagerachse 10 treibt das Stirnrad 18 auf der 2. Lagerachse 20 an. Das Stirnrad 18 ist formschlüssig mit dem Kegelrad 21 verbunden. Das Kegelrad 25 ist drehbar gelagert über die 2. Lagerachse 20 mit der Gelenkgabel 22 verbunden und treibt über die 1. Lagerachse 23 das Anschlusskegelrad 25 an.

Die Drehmoment- und Drehzahlübertragung ist bei jedem Beugungswinkel bis max. 90° durchgängig von der antreibenden bis zur anzutreibenden Gelenkhälfte vorhanden. Aus Gründen der gleichmäßigen Lasteinleitung in die Gelenkgabeln (4, 22) und gleichmäßigen Verteilung über die jeweilige Verzahnung, sind alle Kegel- und Stirnradverbindungen auch auf der jeweils gegenüberliegenden Seite angeordnet, wobei der Drehsinn des gegenüberliegenden Zahnrades naturgemäß entgegengesetzt ist.

Das Anschlusskegelrad 1, das über die 1. Lagerachse 2 mit der Gelenkgabel 4 verbunden ist, treibt über die 2. Lagerachse 6 die beiden Kegelräder 5 an. Wobei ein Kegelrad 5 vorwärts und das gegenüberliegende Kegelrad entgegengesetzt angetrieben wird. Jedes der beiden Kegelräder 5 ist fest mit einem Stirnrad 8 verbunden. Das jeweilige Stirnrad 8 auf der 2. Lagerachse 6 treibt jeweils das Stirnrad 9 auf der 3. Lagerachse 10 an, je Seite mit entgegengesetzten Drehsinn. Über die jeweilige 3. Lagerachse 10 und 15 des Achsenkreuzes 13 wird die Kraftübertragung von einer Gelenkhälfte an die andere Gelenkhälfte übertragen.

Die beiden Kegelräder 12 und 14 sind im gegenseitigen Eingriff, ebenso die hierzu jeweils gegenüberliegenden Kegelräder. Somit befinden sich auf dem Achsenkreuz 13 insgesamt 4 Kegelräder, von denen jeweils das gegenüberliegende Kegelrad naturgemäß einen entgegengesetzten Drehsinn hat. Hierbei erfolgt die Kraftübertragung entsprechend dem Beugungswinkel bis max. 90° von der ersten auf die zweite Gelenkhälfte.

Das Kegelrad 14 und hierzu gegenüberliegende Kegelrad treiben gemeinsam über die 3. Lagerachse 15 jeweils die beiden Stirnräder 17 an. Die Stirnräder 17 und Kegelräder 14 sind fest miteinander verbunden, wobei beide Zahnräder an jeder Gelenkgabel freidrehend in der 3. Lagerachse 15 gelagert sind. Das Stirnrad 17 auf der 3. Lagerachse 10 treibt das Stirnrad 18 auf der 2. Lagerachse 20 an, ebenso in entgegengesetzten Drehsinn das hierzu gegenüberliegende Stirnrad der anderen Gelenkgabel. Das Stirnrad 18 ist fest mit dem Kegelrad 21 verbunden. Beide Kegelräder 25 sind drehbar über die 2. Lagerachse 20 mit der Gelenkgabel 22 gelagert und treiben über die 1. Lagerachse 23 gemeinsam das Anschlusskegelrad 25 an. Hierbei treibt ein Kegelrad 21 vorwärts und das gegenüberliegende Kegelrad naturgemäß in entgegengesetzten Drehsinn an.

### Bezugszeichenliste zum 90°-Gelenkgetriebe

zur ersten Gelenkhälfte
- 1: Anschlusskegelrad
- 2: 1. Lagerachse
- 3: 1. Lagerung
- 4: Gelenkgabel
- 5: Kegelrad
- 6: 2. Lagerachse
- 7: 2. Lagerung
- 8: Stirnrad
- 9: Stirnrad
- 10: 3. Lagerachse
- 11: 3. Lagerung (Achsenkreuz)
- 12: Kegelrad

zur Verbindung beider Gelenkhälften
- 13: Achsenkreuz

zur zweiten Gelenkhälfte
- 14: Kegelrad
- 15: 3. Lagerachse
- 16: 3. Lagerung (Achsenkreuz)
- 17: Stirnrad
- 18: Stirnrad
- 19: 2. Lagerung
- 20: 2. Lagerachse
- 21: Kegelrad
- 22: Gelenkgabel
- 23: 1. Lagerachse
- 24: 1. Lagerung
- 25: Anschlusskegelrad

## Patentansprüche

1. 90°-Gelenkgetriebe bestehend aus zwei Gelenkgabeln mit fest gelagerten Kegel- und Stirnradpaaren zur formschlüssigen Übertragung einer Drehbewegung bei Winkelversatz der Wellen oder veränderlichem Beugungswinkel zwischen den Wellen bis 90°, wobei jede Gelenkgabel (4, 22) stirnseitig ein Anschlusskegelrad (1, 25) mit einer koaxialen Ausnehmung aufweist, in der eine 1. Lagerung (3, 24) die Anschlusskegelräder (1, 25) aufnehmen, sowie in der 2. Lagerung (7, 19) die Kegelräder (5, 21) und die Stirnräder (8, 18) aufnehmen, des Weiteren in der 3. Lagerung (11, 16) die Stirnräder (9, 17) aufnehmen, die wiederum fest mit den Kegelrädern (12, 14) verbunden sind, und die Kegelräder (12, 14) über das Achsenkreuz (13) zueinander im gegenseitigen Eingriff stehen, gelenkig gelagert und jeweils frei drehend verbunden sind, **dadurch gekennzeichnet, dass** ein Anschlusskegelrad (1, 25) in gegenseitigem Eingriff zu mindestens einem Kegelrad (5, 21) steht und über eine koaxiale 1. Lagerung (3, 24) fest und freidrehend zu einer Gelenkgabel (4, 22) verbunden ist.

2. 90°-Gelenkgetriebe nach Anspruch 1, **dadurch gekennzeichnet, dass** das Kegelrad (5, 21) freidrehend über eine 2. Lagerung (7, 19) an der Gelenkgabel (4, 22) rechtwinklig mit einem Stirnrad (8, 18) fest verbunden ist.

3. 90°-Gelenkgetriebe nach Anspruch 1, **dadurch gekennzeichnet, dass** das Stirnrad (8, 18) in gegenseitigem Eingriff über eine 3. Lagerung (11, 16) an der Gelenkgabel (4, 22) zu dem Stirnrad (9, 17) freidrehend verbunden ist.

4. 90°-Gelenkgetriebe nach Anspruch 1, **dadurch gekennzeichnet, dass** das Stirnrad (9, 17) freidrehend über die 3. Lagerung (11, 16) an der Gelenkgabel (4, 22) über die 2. Lagerachse koaxial mit einem Kegelrad (12, 14) fest verbunden ist.

5. 90°-Gelenkgetriebe nach Anspruch 1, **dadurch gekennzeichnet, dass** das Kegelrad (12, 14) freidrehend auf einem Achsenkreuz (13) gelagert ist und rechtwinklig mindestens mit einem zweiten Kegelrad (12, 14) in gegenseitigem Eingriff zueinander steht.

6. 90°-Gelenkgetriebe nach Anspruch 1 bis 5, **dadurch gekennzeichnet, dass** das Achsenkreuz (13) die beiden Gelenkgabeln (4, 22) koaxial um 90° verdreht zueinander drehbar gelagert verbindet und die beiden Gelenkhälften freidrehend mit einem Beugungswinkel von max. 90° zusammen hält.

7. 90°-Gelenkgetriebe nach Anspruch 1 bis 6, **dadurch gekennzeichnet, dass** die beiden Gelenkgabeln (4, 22) mit jeweils gegenüberliegenden Stirn- und Kegelrädern ausgestattet werden, um eine gleichmäßigen Lasteinleitung zu erreichen.

8. 90°-Gelenkgetriebe nach Anspruch 6 und 7, **dadurch gekennzeichnet, dass** die Gelenkgabel (4, 22) je Kraftstrang insgesamt 3 Lagerachsen aufweist, von denen die 1. Lagerachse (2, 23) koaxial mit einem Anschlusskegelrad (1, 25) verbunden ist, die 2. Lagerachse (6, 20) zur koaxialen Aufnahme von den Kegelrädern (5, 21) mit Stirnrädern (8, 18) vorgesehen ist, die 3. Lagerachse (10, 15) die Stirnräder (9, 17) und die Kegelräder (12, 14) koaxial aufnimmt, und die 2. Lagerachse (6, 20) neben der 3. Lagerachse (10, 15) jeweils rechtwinklig zur 1. Lagerachse (2, 23) stehen.

9. 90°-Gelenkgetriebe nach Anspruch 1 bis 8, **dadurch gekennzeichnet, dass** das Achsenkreuz (13) an seinen 4 Enden für die Aufnahme von je einem Kegelrad (12, 14) und einem Stirnrad (9, 17) geeignet ist, von denen die benachbarten Kegelräder (12, 14) in gegenseitigem Eingriff zueinander stehen und dadurch die jeweils axial gegenüberliegenden Kegelräder (12, 14) mit entgegengesetzten Drehsinn drehen.

10. 90°-Gelenkgetriebe nach Anspruch 6 bis 9, **dadurch gekennzeichnet, dass** die Gelenkgabeln (4, 22) eine abgestufte Gabel aufweisen, um den Einbau des Achsenkreuzes 13 in die jeweilige Gelenkgabel (4, 22) von der Gabelinnenseite zu ermöglichen.
